# EUROPEAN PATENT APPLICATION

(11) **EP 4 807 318 A1**
(43) Date of publication of application: **16.09.2026**
(21) Application number: 25162649.5
(22) Date of filing: 10.03.2025
(51) Int. Cl.: G01C 3/00, G01C 15/00, G01S 17/02, G05D 1/246, G06N 20/00, G06T 7/13, G06V 10/70, G01B 11/02, G01C 21/20, B64U 10/20

(54) **METHOD FOR OPERATING AN AUTONOMOUS MEASURING APPARATUS AND AUTONOMOUS MEASURING APPARATUS**

(71) Applicant: AICI GmbH, 50935 Köln (DE)
(72) Inventor: Ludmann, Anna, 51766 Engelskirchen (DE); Jain, Rushabh Rajendra, 81673 München (DE); Aly Elgouhary, Yousef Ahmed, 85055 Ingolstadt (DE); Beech Mole, Henry, 75018 Paris (FR)
(74) Representative: Epping - Hermann - Fischer

(57) **Abstract**

The invention relates to a method for operating an autonomous measuring apparatus, the method comprising the following steps: obtaining (101) a first map of a to-be-measured area of a structure; determining (102) a plurality of distance measuring points for performing a distance measurement; autonomously (103) navigating the measuring apparatus to each of the plurality of distance measuring points; performing (104) distance measurement in the to-be-measured area of the structure at each of the plurality of distance measuring points; and combining (105) results of the distance measurements with the first map of the to-be-measured area of the structure to obtain a second map. The invention further relates to a corresponding apparatus and a system.

## Description

This invention relates to a method for operating an autonomous measuring apparatus and a corresponding apparatus. The invention further relates to a system comprising such apparatus, a computer program product, and a computer-readable storage medium.

Obtaining detailed measurements of areas of structures such as buildings, for example, is commonly related to high workloads including workers taking measurements. Taking such measurements, therefore, results in long and expensive processes and are prone to errors. Autonomous devices, such as robots, are used to reduce the efforts for obtaining such measurements. However, known techniques to perform such measurements with autonomous devices have a relatively low accuracy, for example measurements using autonomous devices may have a mean error of up to at least 3 to 5 cm in cases of indoor building maps, for example, such that a high accuracy therewith cannot be ensured. Since in many cases, however, it is important to have accurate measurements, it is desirable to find a solution to increase accuracy of such measurements without significant increase of workload and cost.

Therefore, it is an object of this invention, to describe a method and an apparatus, with which an autonomous measurement of an area of a structure can be obtained with low efforts but increased accuracy over those techniques known in the art.

The above-mentioned object of the invention is achieved by the subject-matter of the independent attached claims.

According to a first aspect, a method for operating an autonomous measuring apparatus comprises the following steps:
- obtaining a first map of a to-be-measured area of a structure;
- determining a plurality of distance measuring points for performing a distance measurement;
- autonomously navigating the measuring apparatus to each of the plurality of distance measuring points;
- performing distance measurement in the to-be-measured area of the structure at each of the plurality of distance measuring points; and
- combining results of the distance measurements with the first map of the to-be-measured area of the structure to obtain a second map.

An advantage thereof is that a measurement of the to-be-measured area of the structure may be obtained, which has an increased accuracy over known methods in that first a general first map of the to-be-measured area is obtained and the dedicated distance measurements are performed at dedicated distance measuring points, such that the first map may be enriched with the results of the dedicated distance measurements. The dedicated distance measurements, in particular, have a higher accuracy than the first map, such that the second map has an improved accuracy due to the aforementioned combination. Moreover, the entire method is performed by the autonomous measuring apparatus, such that efforts for obtaining the second map, i.e., the combination of the results of the distance measurements and the first map, can be kept low.
A structure, in the context of this application, may be a building or any other kind of structure, e.g. of infrastructure (public spaces, streets, bridges, etc.), any means of transport (ships, airplanes, trains, etc.), and so on. The to-be-measured area of the structure may be an interior and/or an exterior of said structure. The structure may be only one of the aforementioned examples, or may also be a composition of two or more of the aforementioned examples (for example a space between two or more houses, etc).

The first map may be obtained, by the autonomous measuring apparatus, for example by navigating the apparatus within the to-be-measured area of the structure. Alternatively, however, the first map may also be obtained by loading the first map to the autonomous measuring apparatus, for example from a mobile device or a server, to which the apparatus may be connected. The first map may be any map of the to-be-measured area with a lower accuracy, for example with a mean error of its measurements of up to 3 to 5 cm, for example.

The autonomous measuring apparatus in this application is configured to autonomously navigate around the to-be-measured area and carry out the above-mentioned method without human interaction. For example, merely a starting of the apparatus is required and then, the apparatus carries out said method without human interaction. For the autonomous navigation, commonly known robotic techniques for such navigation may be used. For the autonomous implementation of the described method, instructions/software may be stored on the apparatus and executed by a processing unit of the apparatus.

The distance measuring points are to be understood as points, at which the apparatus performs distance measurements. According to a preferable embodiment of the invention, the plurality of distance measuring points comprises a low or lowest amount of distance measuring points, with which all relevant measurements of the to-be-measured area may be taken.

The distance measurement may be performed using any distance measurement technique known in the art. The distance measurement may, in particular, determine a distance between the measuring apparatus and a structure, whose distance is to be measured.

For example, the distance measurement may be performed by the measuring apparatus by measuring distances to walls on opposite sides of the measuring apparatus. For example, the distance measurement may use laser sensors to perform the distance measurement. For example, the distance measurements are performed when the measuring apparatus is at a standstill at a respective distance measuring point. Alternatively or additionally, the distance measurements are performed during a movement of the measuring apparatus. Distance measurements during a movement of the measuring apparatus may be advantageous in case shapes such as non-straight structures, for example curved structures, are to be measured. Furthermore, however, also straight structures, such as even walls, walls with protrusions, walls with recesses, etc., may be measured during a standstill and/or during movement. In case of measurements during a movement of the apparatus, the measuring apparatus moves along the to-be-measured structure, e.g. by passing along the curve, recess, protrusion, etc., and records distance measurements with regard to said structure during the movement. More details and further embodiments in that regard will be described below.

Combining the results of the distance measurements with the first map may be understood as entering the results of the distance measurements as values into the first map to obtain the second map. Alternatively or additionally, combining the results may also be understood as correcting the layout of the first map based on the distance measurements to obtain the second map. Moreover, combining the results of the distance measurements with the first map may be done directly by the autonomous measuring apparatus itself, and a combined output may be provided, or the autonomous measuring apparatus may output the results of the distance measurements with a reference to the first map, such that another device (e.g., a mobile device or a server) may combine the results of the measurements with the first map as described above.

According to at least one embodiment, the step of determining a plurality of distance measuring points in the first map for performing a distance measurement comprises:
- determining a plurality of edge detection points in the first map;
- performing vertical edge detection at each of the edge detection points;
- determining the plurality of distance measuring points from results of the vertical edge detection using at least one machine learning, ML, model.

An advantage thereof is that particularly relevant distance measuring points may be chosen, which can further improve accuracy of the measurements, while an amount of distance measuring points in the plurality of distance measuring points may be kept low, which reduces a time consumed for measuring the to-be-measured area.

In an empty to-be-measured area, vertical edges generally relate to corners or similar points of interest (e.g. doorframes and window frames) on a wall of the structure. Therefore, such vertical edges may be advantageously used as distance measuring points, since taking measurements at each of such points may allow covering of all relevant parts of a corresponding to-be-measured area, including alcoves, recesses, pillars, protrusions, etc., in the walls. At the same time, unnecessarily large numbers of distance measuring points may thereby be avoided.

Edge detection points, in the context of this application, are points at each of which the apparatus performs a vertical edge detection. Vertical edge detection may be performed, for example, in that the apparatus captures a picture of the to-be-measured area from a respective edge detection point and determines vertical edges in said picture.

The at least one ML model used to determine the plurality of distance measuring points from results of the vertical edge detection may comprise any ML model that learns how to determine actual locations of edges from the results of the vertical edge detection. For example, in case the vertical edge detection delivers more results for vertical edges than actual vertical edges exist, e.g. because a same vertical edge may be determined multiple times due to the performing of vertical edge detection at each of the plurality of edge detection points, the ML model may learn to determine which of the multiple results of the vertical edge detection belongs to the same vertical edge, thereby determining the actual location of vertical edges.

The location of the vertical edges may then be registered in the first map. Each distance measuring point may then be determined to be located at each location, where an actual edge is detected.

In this case, i.e., in the case that detected edges are used as distance measuring points, to navigate to the distance measuring point may be understood as to navigate as close as possible to said point, for example as close as possible to a corresponding wall at which a respective distance measuring point/vertical edge is detected.

For determining the plurality of distance measuring points, the results of the vertical edge detection may be located in the first map, to determine a location of each of the distance measuring points in the first map.

Optionally, the determining of the plurality of distance measuring points may further comprise the following steps:
- classifying a type of at least one wall based on information of the first map, i.e., whether the at least one wall has 0, 1, 2, or more reference surfaces; and
- determining distance measuring points for the at least one wall whose type has been classified and/or filtering out invalid distance measuring points with inputs based on the first map.

An advantage thereof is that determining the plurality of distance measuring points may further be improved and duplicate measurements may be reduced or avoided.
The classifying of the type of at least one wall and/or the filtering of invalid distance measuring points may also be performed individually, without the respective other step, in the context of the first aspect according to any embodiments discussed herein.

In this context, the number of reference surfaces indicates how many distance measuring sensors are pointing at the respective wall, even if the measuring apparatus is positioned next to the particular wall. In case the particular wall is not pointed at by any of the distance measuring sensors, the wall is a 0 reference surface wall. In case the particular wall is pointed at by one of the distance measuring sensors, the wall is a 1 reference surface wall, etc.

The maximum number of references that a surface of a wall can be assigned with, i.e., the maximum number of distance measuring sensors that point at a particular surface of a wall, depends on the number of distance measuring sensors that the measuring apparatus comprises on the side facing towards the particular wall. Cases, in which the measuring apparatus is positioned next to a particular wall but the particular wall is a 0 reference surface wall, are for example cases, in which the particular wall is a protrusion or recess, etc., of a larger structure, which has a smaller width than a distance between two neighboring sensors of the measuring apparatus. In such a case, in particular, also the above-discussed distance measurement during movement of the measuring apparatus may be applied.

Invalid distance measuring points, in this context, are distance measuring points which lie outside a valid space of the structure, i.e., distance measuring points that cannot be reached, e.g., due to obstacles such as furniture, etc., or due to any other reason, and/or invalid distance measuring points may be distance measuring points, from which no meaningful measurement of a to-be-measured area can be obtained, e.g., due to obstacles blocking the measuring path. Further, distance measuring points that may be detected as invalid distance measuring points may be distance measuring points that can be filtered out due to redundancy, i.e., in case from those distance measuring points distance measurements would be performed which are already carried out from another distance measuring points. Reducing the number of distance measuring points may significantly improve the time required for measuring the to-be-measured distances within a structure.

According to at least one embodiment, the step of determining a plurality of edge detection points in the first map comprises:
- determining a plurality of random points at random locations in the first map;
- performing sliding window detection on the first map to determine the plurality of edge detection points from the plurality of random points, wherein the plurality of edge detection points are determined such that the entire to-be-measured area of the structure is visible from the plurality of the edge detection points.

An advantage thereof is that a low or lowest number of edge detection points may be determined, from which the entire to-be-measured area may be covered, after vertical edge detection is performed at each of the edge detection points. This further reduces time consumed for the measuring process. In particular, the number of determined edge detection points is less than the number of random points.

For example, the random points may be evenly spread over the to-be-measured area. For example, an amount of random points may be predetermined, e.g., in total, or per square meter, etc.

The sliding window detection uses a sliding window algorithm that creates a window (or box) of a fixed size, usually a square or rectangle, covering a part of the first map (e.g. starting in one corner of the first map). This window slides across the first map systematically. At each position, the algorithm analyzes the content inside the respective window. In this case, the algorithm may determine, mathematically, average positions of all points at which the entire to-be-measured area shown in said window is visible. After analyzing one section, the window is moved to a next position, and repeats the analysis on the next section. The window keeps moving and analyzing until it has covered the entire first map. In some cases, there may be an overlap between nearby windows to ensure that no detail is missed.

For example, the number of edge detection points is in general as small as possible to still measure the entire to-be-measured area.

That the entire to-be-measured area of the structure is measurable from the plurality of edge detection points is to be understood as after having stopped at all edge detection points, the entire to-be-measured area has been visually covered by the autonomous measuring apparatus.

According to at least one embodiment, the step of performing vertical edge detection comprises:
- obtaining a picture of the to-be-measured area of the structure; and
- determining a vertical edge in the obtained picture at a location, where a contrast of the picture along a vertical line lies above a predetermined threshold.

An advantage thereof is that a fast and reliable detection of vertical edges is provided. For example, a camera having a field of view of approximately or above 100° may be used, for determining the vertical edges, which allows a number of edge detection points to be kept low, compared with smaller fields of view, thereby further reducing time consumed for the measuring process. The vertical edges may be determined in the obtained picture, for example, using any suitable computer vision technique to detect edges in an image. For example, an algorithm such as Canny Edge Detection may be used, with which areas of rapid intensity change are identified and thereby edges are detected. Alternatively or additionally, also ML models may be used for determination of the vertical edges in the obtained picture.

According to at least one embodiment, the step of determining the plurality of distance measuring points from results of the vertical edge detection using at least one ML model comprises:
- determining an expected number of edges using a first ML model; and/or
- clustering the results of vertical edge detection using a second ML model to determine the distance measuring points.

An advantage thereof is that a reliable and efficient technique to determine the plurality of distance measuring points, i.e. the actual locations of actual detected edges, from the results of the vertical edge detection is provided.

The determination of the expected number of edges allows a more detailed determination of the actual edges, in particular if used in combination with the clustering, since the second ML model then can particularly cluster the results of the vertical edge detection based on the expected number of edges.

The clustering of the results of vertical edge detection clusters all results of separate vertical edge measurements together, which are thereby determined to belong to the same actual edge.

The clustering may be based on a Neighborhood Concept: A software processes a large set of points (locations) to identify key clusters or "gathering spots" on the first map. It may first remove duplicate or very close points for simplicity. Then, it may use DBSCAN to estimate the number of natural groups and KMeans to pinpoint the central locations of these groups. The number of clustered points may depend on: how close points need to be to be grouped, and/or minimum points needed to form a cluster, and/or how tightly the points are packed in an area.

According to at least one embodiment, the at least one model is an unsupervised ML model, and/or the first ML model is a density-based spatial clustering of applications with noise, DBSCAN, model, and/or the second ML model is a KMeans clustering model. An advantage of using an unsupervised ML model is that such ML model may learn based on a relatively low amount of training data. This allows an efficient use of an ML model with low complexity.

DBSCAN is a clustering algorithm used in machine learning and data mining to group points in a data set that are closely packed together based on their distance to other points. KMeans clustering is a method of vector quantization that aims to partition n observations (i.e., the results of the edge detection) into k clusters (i.e., the determined number of actual edges) in which each observation belongs to the cluster with the nearest mean.

For example, also a combination of the DBSCAN and KMeans for clustering may be used. In such case, the DBSCAN may identify clusters based on the density of points and labels noise (outliers) as -1. The DBSCAN may estimate the number of clusters based on the data's density. The KMeans may refine the clustering by using the number of clusters estimated by DBSCAN. The KMeans may find the centroids of the clusters, which are then used as the final keypoints and determined as the distance measuring points.

An advantage thereof is that DBSCAN may be used to detect natural clusters and handle noise, while KMeans may optimize the cluster centroids for more accurate distance measuring points.

According to at least one embodiment, the step of autonomously navigating the measuring apparatus to each of the plurality of distance measuring points comprises:
- navigating the measuring apparatus as close as possible to a wall at which the respective distance measuring point is located; and/or aligning the measuring apparatus, with respect to a direction of the distance measurement, in parallel to a wall next to the measuring apparatus; or
- determining a part of the structure that is to be measured; determining a starting point for the measurement of the to-be-measured part of the structure; navigating along the to-be-measured part of the structure and performing distance measurements during the navigation along the to-be-measured part of the structure.

An advantage thereof is that an accuracy of the measurement may be further increased. In particular in aligning the apparatus such that the direction of the distance measurement is in parallel to a wall next to the apparatus allows a distance measurement with a low error. Additionally, from the alignment of the apparatus in parallel with the wall next to the apparatus, also an angle between the wall next to the apparatus and a neighbor wall of that next wall may be determined using an inertial measurement unit, IMU, of the apparatus and the orientation of the apparatus together with the measurement of the apparatus. With the measurements performed during a navigation along the to-be-measured part of the structure, also curved walls, doors, windows, etc., for example, may be measured with a high accuracy. For example, the first of the two measuring alternatives may be used for straight walls, and the second of the two measuring alternatives above may be used for curved walls, doors, and windows.

Optionally, whether a wall is curved or straight may be determined based on the information comprised in the first map.

For example, in case the part of the structure that is to be measured is a curved wall, the following steps may be performed: Regardless of how many turns a curve of the to-be-measured part has, it may be treated as a single continuous entity. If the curved wall has neighboring straight walls adjacent to the curve, several points (depending on the length and the complexity of the curve) may be obtained on the curve near each straight wall. These several points may be used to calculate a function representing the initial segment of the curve. For example, for this purpose a quadratic or cubic function may be used. Intersection points between the calculated function and the straight wall's line equation may be determined, the straight wall in this context being represented by said equation, for example based on the information comprised in the first map. This intersection point may be determined as one endpoint of the curve. The process may be repeated for the other straight wall/curved wall connection, to determine the second endpoint of the curve. In case the to-be-measured part does not have a neighboring straight wall, a random starting point for the measurement may be chosen and the apparatus may follow along the shape until ending at the starting point.

Further for a measurement of a curved wall, additional points along the curve to accurately capture its shape may be determined, wherein the apparatus is navigated along the additional points while performing the distance measurement. Those additional points may be in a straight line passing along the curved wall or may be along a curved path, for example following the wall's curvature. A distance between those additional points may be based on the complexity of the curve, including the number of turning points and the degree of curvature, for example. If the curve is particularly intricate or narrow in some sections, it may be considered to navigate the apparatus such that it can capture points in these areas effectively. After determining the additional points, all additional points may be connected, if available also with the determined endpoints, using spline interpolation to create a smooth and continuous representation of the curve.

Optionally, the measuring apparatus may use an ML model to estimate a rough position of at least one door and/or at least one window in the first map. Based on the first map, the measuring apparatus may then create measurement points to take accurate distance measurements for the at least one door and/or at least one window. The apparatus may then provide the coordinate of a center of the at least one door and/or at least one window together with the respective width such that they may be accurately included in the second map. The accurate measurements for the at least one door and/or at least one window may be recorded by a combination of side laser sensors paired along with specific motions of the apparatus.

According to at least one embodiment, the method further comprises the step:
- performing object detection in the to-be-measured area of the structure to determine a location of at least one object that is not part of the structure; and
- filtering out edges that belong to the at least one object that is not part of the structure from the results of the vertical edge detection.

An advantage thereof is that objects, which may not belong to the structure itself, may be detected, and considered for the measuring of the to-be-measured area. Such objects may be, for example, furniture, plants, heating devices, doors, windows, etc. Furniture, plants, etc., may therewith be excluded from the measuring. Objects such as doors and windows, for example, may be therewith measured correctly and considered for the second map.

By considering such objects, even structures that are not entirely empty may be measured, without obtaining erroneous measurements due to such objects being present. In particular, the distance measurements may be performed such that none of the determined objects that are to be disregarded are disturbing the distance measurements, or other objects, such as doors and windows, may be measured accurately.

The filtering out of edges that belong to not-to-be-measured objects allows a more accurate determination of edges belonging to the structure itself.

For the object detection, for example, an ML model (object detector) may be used.

The steps of object detection and filtering of edges may be also included individually into any of the embodiments of the first aspect disclosed herein.

Moreover, detected objects may also be entered into the second map.

Additionally, detected objects may also be marked in the first and/or the second map.

According to at least one embodiment, the method further comprises the step:
- uploading the first map to a mobile device and/or a server; and/or
- uploading the second map to the mobile device and/or the server.

An advantage thereof is that the autonomous measuring apparatus directly provides the result of the measuring process in form of the first map and/or of the second map to a mobile device and/or a server, such that a user may directly access/view the first map and/or the second map. The mobile device may comprise a specific application for displaying or even further processing the first and/or second map, corresponding images, or any other information related to the measuring apparatus.

Before the first map is uploaded, the corresponding data may be processed on the measuring apparatus. For example, a floor plan using the SLAM information may be generated, paired with depth information and results of object detection followed by a number of image processing steps may be provided, depending on what information is available.

Before the second map is uploaded, the corresponding data may be processed on the measuring apparatus. The SLAM information may be used as a reference to process the multiple line measurements from the distance measurements taken by the measuring apparatus, and it may be stitched together.

Additionally, detected objects may be included in the first and/or second map, or further information with regard to the first and/or second map may be displayed, for example in case manual measurements would be required, etc.

For example, a user may be able to select on the mobile device the first and/or the second map and/or visuals as an outcome. If the user selects the first map, the first map may be uploaded to the mobile device. Uploading the first map may be quicker and may provide a basic overview. If the user selects any other process, the first map with either the second or the first map and visuals may be uploaded.

According to at least one embodiment, the step of obtaining a first map of a to-be-measured area of the structure comprises:
- performing simultaneous localization and mapping, SLAM, in particular 3D SLAM; and/or
- performing depth measurement using a depth camera.

An advantage thereof is that there with an efficient and fast method to determine the first map is provided. Using 3D SLAM has further the advantage that reflective surfaces have little or no impact on the obtaining of the first map. For example, for obtaining the first map using SLAM, the ROS2 slam_toolbox may be used. Use of a depth camera may additionally be included, to perform 3D model mapping, which has further the advantage that objects, such as a heating device, for example, may be conveniently distinguished from a wall.

In particular, a combination of SLAM and depth measurements may be performed, wherein 3D SLAM using point clouds and depth information from a depth camera is used. The camera generates dense 3D point clouds in real time, capturing accurate spatial details of the environment. Fort this purpose, a method called RTAB-Map may be used, to process these point clouds for: localization (i.e., estimating the camera's position within the map), mapping (i.e., building a detailed 3D map of the environment), and loop closure (i.e., recognizing previously visited locations to refine the map and correct positional drift).

According to at least one embodiment, the step of performing distance measurement in the to-be-measured area of the structure at each of the plurality of distance measuring points comprises:
- raising a movable unit of the autonomous measuring apparatus and performing the distance measurement using the movable unit.

An advantage thereof is that objects, which may be present in the to-be-measured area but are not part of the structure, may be neglected, since such objects usually only reach a certain height, the movable unit being able to reach a higher height than such object to perform the distance measurement undisturbed.

The movable unit may be raised, for example, using a telescopic rod, or may be a drone, being raised by flying above the remaining part of the measuring apparatus.

For example, this embodiment may be combined with the object detection mentioned above, such that the raising may be performed, whenever the object detection detects an object disturbing the distance measurement.
In this embodiment, it may be only the movable unit, which performs the distance measurement, or it may be both the movable unit and the remaining part of the measuring apparatus, which are able to perform distance measurement.

According to at least one embodiment, the movable unit is a drone, and the method further comprises:
- tracking a position of the drone; and
- performing the distance measurement using the drone after a location of the drone has been determined to be stable for a time longer than a predetermined time threshold.

An advantage thereof is that a reliable distance measurement may be achieved, which is not disturbed by a movement of the drone. Therewith, accuracy may further be improved. Alternatively, however, measurements may also be taken during a movement of the drone.

Optionally, the measurement of the first map may be used to define a flight height of the drone. For example, if there is a difference higher than a threshold between the measurement of the first map and the measurement the drone is taking, the flight height of the drone may be increased. If the distance measurements of the drone are close to the first measurement, the flight may be stopped and the drone may hover for a few seconds. From measurements during the hovering, an average of the measurements may be calculated and added to the second map. As a safety function the drone may always stop close to the ceiling.

According to a second aspect, an autonomous measuring apparatus comprises:
- a first map obtaining unit, configured to obtain a first map of a to-be-measured area of a structure;
- a processing unit, configured to determine a plurality of distance measuring points for performing a distance measurement;
- an autonomous navigation unit, configured to autonomously navigate the measuring apparatus to each of the plurality of distance measuring points; and
- a distance measurement unit, configured to perform distance measurement in the to-be-measured area of the structure at each of the plurality of distance measuring points; wherein the processing unit is further configured to combine results of the distance measurements with the first map of the to-be-measured area of the structure to obtain a second map.

Advantages and embodiments of the second aspect may, in general, correspond to those of the first aspect, and vice versa.

The autonomous navigation unit may comprise means for moving the measuring apparatus, such as wheels, track, etc. The autonomous navigation unit may further comprise a processing unit for navigating the apparatus, or may receive navigation commands from the above-mentioned processing unit of the apparatus.

The autonomous measuring apparatus may further comprise a memory unit, configured to store instructions for operating the measuring apparatus, to store the first and/or second map, and any information related to the processing of the measurement.

According to at least one embodiment, the first map obtaining unit comprises at least one Light Detection and Ranging, LiDAR sensor, and/or at least one depth camera.

LiDAR is a method for determining ranges by targeting an object or a surface with a laser and measuring the time for the reflected light to return to the receiver. For example, a 2D LiDAR may be used. Alternatively or additionally, a 3D LiDAR may be used, which uses a scanning technique to determine distances in multiple directions continuously.

An advantage thereof is that using LiDAR sensors provides an efficient and, for the first map sufficiently accurate determination of the first map. Sufficiently accurate in this context means, for example, a mean error of measurements of several centimeters, which is sufficiently accurate to then determine the distance measuring points and perform the distance measurements with higher accuracy.

Optionally, also a depth camera may be used for obtaining the first map. In particular in case a 2D LiDAR is used, which provides a two-dimensional view of the to-be-measured area, additionally using a depth camera may be advantageous to obtain a three-dimensional view of the to-be-measured area.

This case relates to an embodiment, in which the autonomous measuring apparatus obtains the first map itself by navigating within the to-be-measured area of the structure and scanning the first map using said sensors. Additionally or alternatively, the measuring apparatus may comprise a transceiver unit, configured to obtain the first map via data transfer, e.g. from a mobile device or a server.

According to at least one embodiment, the distance measurement unit comprises at least one first laser distance measuring sensor on a first side of the autonomous measuring apparatus, in particular at least two first laser distance measuring sensors, at least one of each at two opposite first sides of the autonomous measuring apparatus.

An advantage thereof is that laser distance measuring sensors have a high accuracy, in particular they may achieve accuracies up to a mean error of only a few millimeters. Moreover, long distances may be measured with such a distance measurement unit, such that a wide range of applications is possible for the described autonomous measuring apparatus.

When at least two first laser distance measuring sensors at two opposite first sides of the autonomous measuring apparatus are used, measurements in one line on two opposite sides of the apparatus may be performed, such that accuracy and reliability of the distance measurements may be improved, in particular, for example, when the apparatus is distanced from a wall, at which a current measuring point is located.

The first and second laser distance measuring sensors may be set up orthogonal with respect to each other. Furthermore, however, more sensors in more directions in different angles, also not arranged orthogonally, may be used.

According to at least one embodiment, the autonomous navigation unit comprises at least two, in particular at least three, second laser distance measuring sensors on at least one second side of the autonomous measuring apparatus, wherein the at least one second side has a main surface being arranged in general orthogonal with respect to a surface of the at least one first side.

Those at least two or at least three second laser distance measuring sensors are, for example, used to align the measuring apparatus with a neighboring wall such that the measuring direction of the at least one first laser distance measuring sensor is parallel to the neighboring wall. For that, the at least two or at least three second laser distance measuring sensors may be arranged on a second side (or further such second laser distance measuring sensors also on an opposite second side), spaced apart on a horizontal line, wherein a parallel alignment with the neighboring wall is achieved by positioning the measuring apparatus such that the measured distance of each of the at least two or at least three second laser distance measuring sensors towards said neighboring wall are in general equal. The expression "in general", in the context of this application, is to be understood as that minor manufacturing tolerances may be accepted without departing from the general concept described. This process may be used for walls without curves, for example. For curved walls, the sensors may be used as discussed above with regard to the measurement of curved walls in the context of the first aspect, details of which will not be repeated herein.

In case at least three second laser distance measuring sensors are used, it can further be detected, if the apparatus is positioned next to a corner, in which case only two laser distance measuring sensors may deliver equal distances to a neighboring wall, without being parallel to said wall. Those cases may be avoided, in case at least three second laser distance measuring sensors are used on one second side of the measuring apparatus.

According to at least one embodiment, the autonomous measuring apparatus further comprises at least one camera, wherein the autonomous measuring apparatus is configured to take a picture with the at least one camera and perform the vertical edge detection using said picture.

An advantage thereof is that an easy, efficient, and inexpensive solution for vertical edge detection is provided.

According to at least one embodiment, the autonomous measuring apparatus further comprises a movable unit, which is configured to be vertically raised and is further configured to perform the distance measurement of the autonomous measuring apparatus.

Advantages and further specific features of the movable unit are described above and apply here accordingly.

According to at least one embodiment, the movable unit is a drone and:
- the drone further comprises a camera unit, configured to take a picture; and/or
- the drone comprises at least one horizontal laser distance measuring sensor for performing the distance measurement of the autonomous measuring apparatus; and/or
- the drone further comprises at least one further sensor facing vertically up; and/or
- the drone further comprises an optical flow and range sensor; and/or
- the drone further comprises at least one visual mark facing vertically down and the autonomous measuring apparatus further comprises a visual detection unit facing vertically up, wherein the visual detection unit is configured to track the visual mark on the drone and to control the drone based on a size and a location of the visual mark.

Advantages thereof are, that with the camera unit, the drone may also capture images of the structure, which, for example, may be stored individually, may be included in the second map, and/or may be stored together with the second map. A user may select whether images are to be taken/displayed/stored/etc.

The at least one horizontal laser distance measuring sensor is configured to perform the distance measurement of the autonomous measuring apparatus. For example, the drone may comprise four laser distance measuring sensors, one for each horizontal direction: front, back, and both sides.

Moreover, using the at least one further sensor, which faces upwards, a distance above the drone may be measured, which can be used for safety reasons to avoid a crashing of the drone into a ceiling or any other object that may be placed above the drone. Moreover, the visual mark on the bottom of the drone and the visual detection unit facing up, towards the drone, on the remaining part of the measuring apparatus, can be used to track a position of the drone, in particular a height of the drone based on a size of the mark and a position of the drone based on an (x,y)-coordinate location of the mark in a horizontal plane. This may be done by continuously determining, using the visual detection unit, a size and location of the visual mark, thereby determining a distance and relative position between the visual detection unit, i.e., the remaining part of the measuring apparatus, and the visual mark, i.e., the drone. Additionally, the visual mark and visual detection unit may also be used to determine whether the drone is stable or not, based on a movement of the visual mark being below a threshold. Alternatively or additionally, the optical flow and range sensor may be used to control the flight of the drone. The optical flow sensor may improve stabilization of the drone in the attitude.

A mission for the drone including takeoff, hover, record the measurements, and then land, may be defined in a controller for the drone itself based on IMU information and the laser sensor readings. The camera with visual marks may be used as an additional system to improve robustness and safety during the flight.

According to a third aspect, an autonomous measuring system comprises the autonomous measuring apparatus according to the second aspect and a mobile device.

The autonomous measuring apparatus and the mobile device comprise each a communication unit, configured to establish a communication link between the measuring apparatus and the mobile device.

An advantage thereof is that for example results of the measuring process, e.g., the second map, may be directly sent to the mobile device. In particular, the communication link may be a direct communication link, such as e.g., according to a Bluetooth standard, a WLAN standard, any short-range communication standard, etc. (any historical, current, or future version of those standards being able to be used). This allows a communication between the measuring device and the mobile device without any external communication infrastructure being provided (such as access to the Internet, for example). Alternatively or additionally, however, the communication units may also be configured to establish a communication link via a communication infrastructure, such as a mobile communication network and/or the Internet, etc.

According to at least one embodiment, the system may further comprise a server, wherein the communication units of the autonomous measuring apparatus and/or the communication unit of the mobile device may be configured to further establish a communication link to the server, to upload or download information relating to the measuring process to or from the server.

According to a fourth aspect, a computer program product comprises instructions, which can be executed on a processing unit of the autonomous measuring apparatus according to the second aspect or any embodiment of the second aspect, and thereby implement the method according to the first aspect or any embodiment of the first aspect.

According to a fifth aspect, a computer-readable storage medium comprises the computer program product according to the fourth aspect.

All embodiments and advantages that are discussed above with regard to one of the aspects or respective embodiments thereof may correspondingly be combined with the embodiments and advantages of the other aspects or their respective embodiments. Further advantageous embodiments are disclosed in the appended claims, the attached figures, and the following detailed description of the figures. Elements with in general the same function may have the same reference signs in the figures, however, they do not have to be identical in all details. Features and elements that occur multiple times in the figures might be described in detail only at their first occurrence, the corresponding description applying, however, equally to the further occurrences.

In the figures:
FIG. 1 shows a flowchart of a method for operating an autonomous measuring apparatus according to one embodiment of the invention;
FIG. 2 shows a flowchart of a method for operating an autonomous measuring apparatus according to another embodiment of the invention;
FIG. 3 shows a schematic drawing of an autonomous measuring apparatus according to one embodiment of the invention;
FIG. 4 shows a schematic drawing of an autonomous measuring apparatus according to another embodiment of the invention;
FIG. 5 shows a system for performing measurement of a to-be-measured area of a structure according to one embodiment of the invention;
FIG. 6 shows an autonomous measuring apparatus 1 according to yet another embodiment;
FIG. 7 shows an example of a structure with a to-be-measured area;
FIGs 8 to 15 show different states of the autonomous measurement according to the invention; and
FIGs 16 and 17 show an autonomous measuring apparatus 1 according to yet another embodiment.

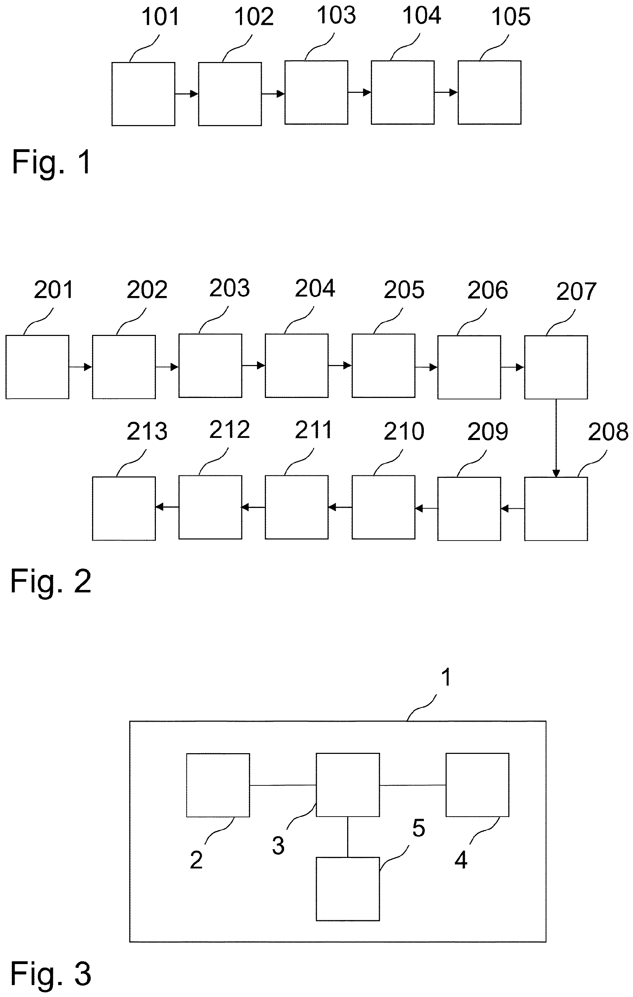

FIG. 1 shows a flowchart of a method for operating an autonomous measuring apparatus according to one embodiment of the invention.

In a step 101, the autonomous measuring apparatus obtains a first map of a to-be-measured area of a structure. The first map may be obtained by performing a scanning of the to-be-measured area, for example using LIDAR and/or a depth camera, or may be obtained in another way, for example by receiving the first map via a communication channel. The first map may be considered being a rough map having, possibly, an accuracy not better than 3 cm to 5 cm at best, depending on the structure's complexity. This way, the first map may be obtained relatively fast, compared with time-consuming measurements.

In a step 102, the autonomous measuring apparatus determines a plurality of distance measuring points for performing a distance measurement. The distance measuring points are, for example, determined such that all distances, or at least all relevant distances in the to-be-measured area are determined, which are required to obtain a detailed floorplan of the to-be-measured area.

In a step 103, the autonomous measuring apparatus autonomously navigates to a first distance measuring points of the plurality of distance measuring points. To do so, for example, the first distance measuring point is marked in the first map, and the measuring apparatus navigates to the first distance measuring point using known robot navigation techniques.

In a step 104, the autonomous measuring apparatus performs distance measurement in the to-be-measured area at the first distance measuring point. For said distance measurement, in particular, a distance measuring technique is used, which has a higher accuracy than the accuracy of the first map. Any known distance measurement may be used for said distance measurement, for example laser distance measurement.

Steps 103 and 104 are consecutively repeated, until all distance measuring points of the plurality of distance measuring points have been visited by the autonomous measuring apparatus and the respective distance measurements have been taken at each of those distance measuring points. With other words, after the distance measurement has been performed at the first distance measuring point, the measuring apparatus navigates to a second distance measuring point and takes a second distance measurement. After the second distance measurement has been performed, the measuring apparatus navigates to a third distance measuring point and takes a third distance measurement, and so on.

In a step 105, the autonomous measuring apparatus combines the results of the distance measurements with the first map of the to-be-measured area of the structure to obtain a second map.

FIG. 2 shows a flowchart of a method for operating an autonomous measuring apparatus according to another embodiment of the invention. The embodiment of FIG. 2 may be understood as a more detailed exemplary embodiment of the method shown in FIG. 1. Individual or all features shown in the method of FIG. 2 may be included in FIG. 1 and vice versa.

In a step 201, the autonomous measuring apparatus scans a to-be-measured area of a structure to obtain a first map of the to-be-measured are by performing simultaneous localization and mapping, SLAM, in the to-be-measured are of the structure. For example, 2D SLAM or 3D SLAM may be performed. After the first map is obtained, the autonomous measuring apparatus may stop automatically and, optionally, return to a specific spot, e.g. a starting point.

Optionally, it may be determined in the first map, whether walls scanned in step 201 are curved or straight walls.

In a step 202, the autonomous measuring apparatus determines a plurality of random points at random locations in the first map. The random points may be generated by sampling the entire to-be-measured area in the first map. The random points may be distributed evenly within the to-be-measured area. An amount of the determined random points may be predetermined or may be determined based on a size of the to-be-measured area. In a step 203, the autonomous measuring apparatus performs sliding window detection on the first map to determine a plurality of edge detection points from the plurality of random points. The plurality of edge detection points are determined by selecting a number of points from the plurality of random points, from which the entire to-be-measured area of the structure is visible.

In a step 204, the autonomous measuring apparatus navigates to each edge detection point and obtains a picture of the to-be-measured area of the structure at each edge detection point. For example, the obtained picture is a picture with a field of view of 101°, or any other picture, which shows a part or the entire horizontal surrounding of the autonomous measuring apparatus as seen from each current edge detection point. The picture may be, for example, an RGB picture, a grayscale picture, or a black and white picture. Other pictures may also be used.

In a step 205, the autonomous measuring apparatus determines a vertical edge in the obtained picture. The vertical edge is detected based on a contrast of the picture. In particular, the vertical edge is determined at a location, where a contrast of the picture along a vertical line lies above a predetermined threshold.

In a step 206, the autonomous measuring apparatus determines an expected number of edges using a first ML model. The first ML model may be, for example, an unsupervised ML model. In particular, the first ML model may be a density-based spatial clustering of applications with noise, DBSCAN, model. The expected number of edges may be determined based on parameters such as, for example, a size of the to-be-measured area, a number of walls and/or corners of walls detected in the first map, etc.

Optionally, based on the first map, it may be determined whether walls are identified as straight walls or as curved walls, using image processing techniques. Furthermore, measuring points for measuring curved walls may be provided.

In a step 207, the autonomous measuring apparatus clusters the results of the vertical edge detection using a second ML model to determine the distance measuring points. By clustering the results of the vertical edge detection, results of the edge detection that are considered to belong to the same edge are clustered together, to determine a number and location of the actual edge of the structure, that has possibly been detected multiple times due to the fact that a single edge may be visible from multiple edge detection points, thereby being represented in the results of the edge detection multiple times. The second ML model may be a KMeans clustering model.

Optionally, the number of distance measuring points may be optimized by filtering out invalid distance measuring points. Alternatively or additionally, a type of walls may be classified to have 0, 1, 2, or more reference surfaces and/or it may be determined whether a wall is a straight wall or a curved wall. Reference in that regard is made to the detailed discussion of the filtering and classifying above, which applies here correspondingly. In a step 208, the autonomous measuring apparatus navigates as close as possible to a wall at which a first distance measuring point (i.e. the respective actual edge after clustering) is determined to be located. This may be done using commonly known robotic navigation techniques, which may also be used similarly for navigating the apparatus to the edge detection points.

In a step 209, the autonomous measuring apparatus aligns itself in parallel to a neighboring wall, i.e., a wall closest to the apparatus, in particular the wall at which the current distance measuring point is located. The apparatus aligns itself in parallel with respect to a direction of the distance measurement, i.e., in case a laser distance measurement is being used, such that the measuring laser runs in general parallel to said neighboring wall.

The above-discussed steps 208 and 209 are performed in particular for straight walls. Optionally, in case a wall is a curved wall, the following steps may be performed additionally or alternatively to steps 208 and 209: a curved wall is determined to be measured, wherein the information that the wall is a curved wall may be obtained, for example, from the first map. A starting point and an endpoint for the measurement of the curved wall is determined, wherein the starting point and endpoint may be determined based on information relating to intersections of the curved wall and neighboring straight walls, or based on a random point serving both as starting point and endpoint, in case no straight walls are neighboring the curved wall. Several additional points may be determined along the curved wall, either in a straight line or along the curvature of the wall, and the measuring apparatus may navigate from the starting point to the endpoint, passing along the several additional points, while performing distance measurements. For example, in this case, distance measurements to all four horizontal sides of the apparatus may be performed, such that from those distance measurements the accurate measurements of the walls may be obtained. Further aspects of the curved wall measurements have been discussed in detail above and are not repeated herein.

In a step 210, the autonomous measuring apparatus performs object detection in the to-be-measured area of the structure to determine a location of at least one object that is not part of the structure. This object detection may be performed using an AI model for object detection. For example, any commonly known object detection AI model may be used for said step 210.

The object detection, here described as a step 210, may be performed at the same time as the edge detection described with respect to step 205. Thereby, rough positions of the detected objects, such as furniture, may be recorded and, for example, stored in a separate file. Edges of objects may be filtered out from the detected objects, to avoid navigating the apparatus to an occupied place.

In a step 211, the autonomous measuring apparatus performs distance measurement in the to-be-measured area of the structure at the first distance measuring point. This distance measurement may be performed using laser distance measurement. For example, any commonly known technique for using distance measurement may be used. In particular, an accuracy of the distance measurement performed in said step may be higher than an accuracy of the measurements used to determine the first map.

If, in step 210, an object has been detected that is obstructing the distance measurement, i.e., which is located in the path of measuring the distance at the current distance measuring point, the step 211 further comprises: raising a drone of the autonomous measuring apparatus and performing the distance measurement using the drone. To do so, a position of the drone may be tracked by the remaining part of the autonomous measuring apparatus, and the distance measurement may be performed using the drone after a location of the drone has been determined to be stable for a time longer than a predetermined time threshold.

Optionally, in case an accurate measurement cannot be obtained with the autonomous measuring apparatus or with the drone, a corresponding to-be-measured wall may be marked, for example in the first map, as being not sufficiently or not highly accurate, for example as being +/- 5cm accurate (i.e., the accuracy, which can be assumed for the first map). The user may then connect to a manual handheld laser sensor device to select the walls that are marked as not sufficiently/not highly accurate and take the measurement manually. The floor plan may automatically be adjusted with the new measurements taken with the handheld laser sensor device.

Steps 208 to 211 may be repeated until distance measurements have been carried out at all distance measurement points.

In a step 212, the autonomous measuring apparatus combines the results of the distance measurements with the first map of the to-be-measured area of the structure to obtain a second map. Combining the results of the distance measurements with the first map may be understood as entering the results of the distance measurements as values into the first map to obtain the second map. Alternatively or additionally, combining the results may also be understood as correcting the layout of the first map based on the distance measurements to obtain the second map.

In a step 213, the autonomous measuring apparatus uploads the second map to a mobile device and/or a server. Alternatively or additionally, the autonomous measuring apparatus may also display the second map itself, in case a display device is comprised in the measuring apparatus.

Additionally or alternatively, also the first map may be uploaded to the mobile device and/or the server. This may be carried out anytime after the first map has been obtained.

In FIGs 1 and 2, even though a detailed sequence of the respective steps is disclosed, it is to be understood that the sequence of the steps may also be changed, where appropriate. For example, the step of the object detection may be additionally or alternatively performed earlier, for example already during the step of performing SLAM. Other steps may also be adapted accordingly, where possible.

FIG. 3 shows a schematic drawing of an autonomous measuring apparatus 1 according to one embodiment of the invention.

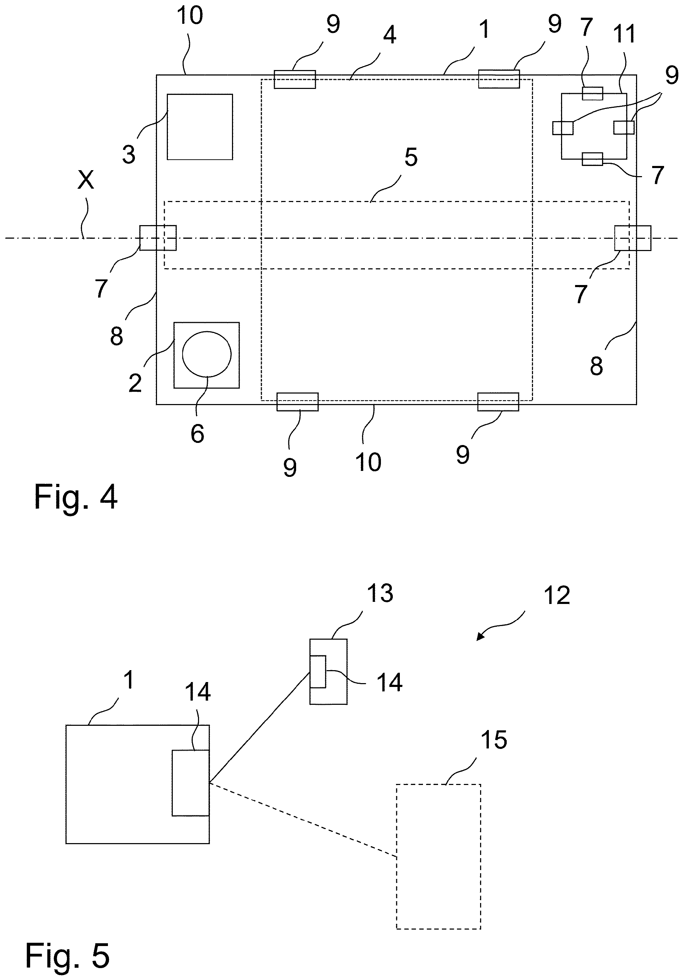

The autonomous measuring apparatus 1 comprises a first map obtaining unit 2, configured to obtain a first map of a to-be-measured area of a structure. The first map obtaining unit 2 may be a unit to obtain the first map via scanning of the to-be-measured area, as will be described in more detail with regard to FIG. 4, for example. Alternatively or additionally, the first map obtaining unit may also be a unit configured to establish a communication channel with, for example, a mobile device or a server, via which the first map may be obtained as a data file.

The autonomous measuring apparatus 1 further comprises a processing unit 3, configured to determine a plurality of distance measuring points for performing a distance measurement. The processing unit 3 may be, for example, any processor, processing chip, microcontroller, etc. which may be configured to perform the required processing.

The autonomous measuring apparatus 1 further comprises an autonomous navigation unit 4, configured to autonomously navigate the measuring apparatus 1 to each of the plurality of distance measuring points. The autonomous navigation unit 4 may merely comprise means for moving the measuring apparatus 1, such as wheels, tracks, etc., such that navigation commands are received from the processing unit 3, or the navigation unit 4 may further also comprise its own processing unit, which is configured to navigate the measuring apparatus 1 to its respective goals, based on e.g. coordinates received from the processing unit 3. With other words, the autonomous measuring apparatus 1 may comprise one processing unit 3, which is performing all required processing of the measuring apparatus 1, or it may comprise multiple processing units, wherein each processing unit performs dedicated tasks.

The autonomous measuring apparatus 1 further comprises a distance measurement unit 5, configured to perform distance measurement in the to-be-measured area of the structure at each of the plurality of distance measuring points.

In the embodiment as shown in FIG. 3, the processing unit 3 is further configured to combine results of the distance measurements with the first map of the to-be-measured area of the structure to obtain a second map.

FIG. 4 shows a schematic drawing of an autonomous measuring apparatus 1 according to another embodiment of the invention. The embodiment of FIG. 4 may be understood as a more detailed exemplary embodiment of the apparatus shown in FIG. 3. Individual or all features shown in the apparatus of FIG. 4 may be included in FIG. 3 and vice versa.

The autonomous measuring apparatus 1 according to FIG. 4 comprises a first map obtaining unit 2, a processing unit 3, an autonomous navigation unit 4, and a distance measurement unit 5. For details, reference is made to FIG. 3.

According to the embodiment of FIG. 4, the first map obtaining unit 2 comprises a Light Detection and Ranging, LiDAR sensor 6. The LIDAR sensor 6 may be a 2D LiDAR or a 3D LiDAR sensor.

The distance measurement unit 5 comprises, in the embodiment shown in FIG. 4, two first laser distance measuring sensors 7. One of each of the two first laser distance measuring sensors 7 is arranged at opposite first sides 8 of the autonomous measuring apparatus 1. The first laser distance measuring sensors 7 are arranged such that they point and therefore measure distances in opposite directions from the opposite first sides 8 along a common central first axis X of the measuring apparatus 1.

According to the embodiment shown in FIG. 4, the autonomous navigation unit 4 comprises four second laser distance measuring sensors 9.

Tow second laser distance measuring sensors 9 are each arranged on opposite second sides 10 of the autonomous measuring apparatus 1. The second sides 10 have each a main surface being arranged in general orthogonal with respect to a main surface of each of the first sides 8. With other words, the main surface of each of the second sides 10 is parallel to the first central axis X.

The autonomous measuring apparatus 1 according to FIG. 4 further comprises a movable unit 11, which is configured to be vertically raised and is further configured to perform the distance measurement of the autonomous measuring apparatus 1. The movable unit 11 comprises two further first laser distance measuring sensors 7, which are arranged on the movable unit 11 and can be raised together with the movable unit 11, such that the measuring apparatus 1 and perform, alternatively or additionally to performing distance measurement using the first laser distance measurement sensors 7 described above, distance measurement using the first laser distance measurement sensors 7 of the movable unit 11. Like the first laser distance measurement sensors 7 discussed above, also the first laser distance measurement sensors 7 of the movable unit are arranged on opposite sides of the movable unit 11, pointing into opposite directions on a common axis. On the two remaining sides of the movable unit 11, there are one further second laser distance measuring sensor 9 arranged on each of those sides.

FIG. 5 shows a system 12 for performing measurement of a to-be-measured area of a structure according to one embodiment of the invention.

The system 12 comprises an autonomous measuring apparatus 1, for example the autonomous measuring apparatus 1 according to FIG. 3 or FIG. 4. Details of the autonomous measuring apparatus 1, which already have been described above, are not repeated herein and are not shown in FIG. 5 to allow an easier understanding, but correspondingly apply to the measuring apparatus 1 as shown in FIG. 5.

The system 12 further comprises a mobile device 13, for example a mobile phone or a tablet computer. The mobile device 13 and the measuring apparatus 1 each comprise a communication unit 14, which is configured to establish a communication channel between the mobile device 13 and the measuring apparatus 1.

Optionally, the system 12 may further comprise a server 15, wherein the communication unit 14 of the autonomous measuring apparatus 1 and/or the communication unit 14 of the mobile device may be configured to further establish a communication link to the server 15. Instead or additional to the above-mentioned communication channel between the mobile device 13 and the measuring apparatus 1, communication between the mobile device 13 and the measuring apparatus 1 may also be performed via the server 15.

The communication link between the measuring apparatus 1 and the mobile device 13 and/or the communication link between the measuring apparatus 1 and the server 15 can be used to upload or download information relating to the measuring process. In particular, said communication links may be used to send the second map from the measuring apparatus 1 to the mobile device 13 and/or to the server 15.

The communication link may be a direct communication link, such as e.g., according to a Bluetooth standard, a WLAN standard, any short-range communication standard, etc. (any historical, current, or future version of those standards being able to be used). Alternatively or additionally, however, the communication units 14 may also be configured to establish a communication link via a communication infrastructure, such as a mobile communication network and/or the Internet, etc.

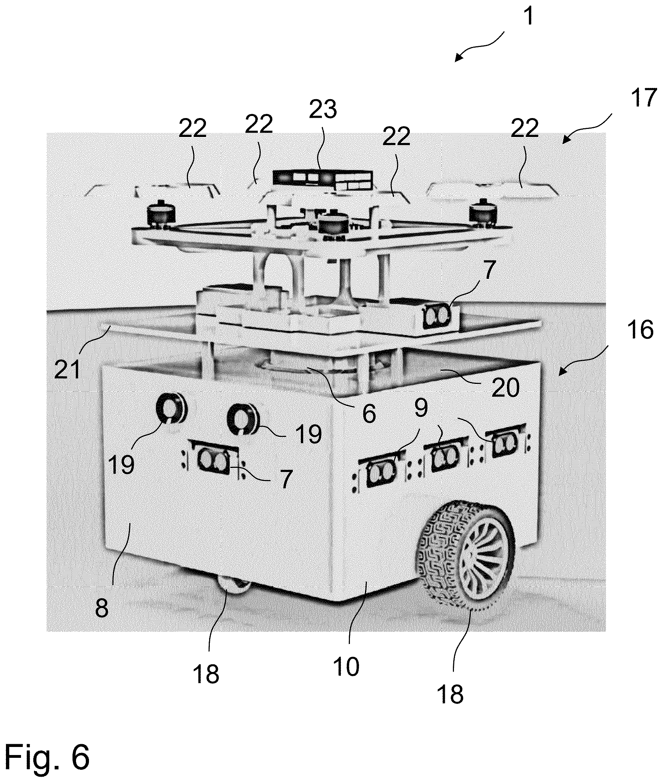

FIG. 6 shows an autonomous measuring apparatus 1 according to yet another embodiment. The embodiment of FIG. 6 may be understood as a more detailed exemplary embodiment of the apparatus shown in FIG. 3 or FIG. 4. Individual or all features shown in the apparatus of FIG. 3 and 4 may be included in the embodiment of FIG. 6 and vice versa. In particular, FIG. 6 shows an external view of the autonomous measuring apparatus 1. Features, which are not visible from the outside, therefore may not be shown in FIG. 6 and may not be discussed or mentioned, but apply to said apparatus 1 as described above with regard to the other figures.

The apparatus 1 shown in FIG. 6 comprises a base element 16, mentioned in other parts of this application also as the remaining part of the apparatus 1, and a drone 17. The drone 17, in this embodiment, relates to the movable unit mentioned in other parts of this application.

The base element 16, in this embodiment, comprises wheels 18, with which the apparatus 1 is able to move around the to-be-measured area of a structure. Alternatively or additionally, however, any other means for movement or additional wheels may be used instead or additionally to the wheels 18. For example, legs, chains, or any other means for moving the base element 16 could be used in that regard.

The view onto the apparatus 1 shown in FIG. 6 is a perspective view such that one first side 8 and one second side 10 are shown, the first side 8 and the second side 10 having orthogonal main surfaces.

On the first side 8, a first laser distance measurement sensor 7 is arranged, with which the apparatus 1 performs distance measurements when located at a distance measurement point as described above. Furthermore, on the first side 8, a depth camera 19 with two lenses is located, which may be used by the apparatus 1 to obtain images of the to-be-measured area, for example to include such images in the above-discussed second map, or to perform, for example, the above-discussed object detection. Moreover, the autonomous measuring apparatus 1 can perform the above-described vertical edge detection using the images taken with the depth camera 19.

On the second side 10, three second laser distance measurement sensors 9 are arranged, which are used by the apparatus 1 to determine a distance from a neighboring wall, and in particular to align the apparatus 1 such that a main surface of the second side 10 is parallel with a surface of such neighboring wall, in that the apparatus is positioned such that each of the three second laser distance measurement sensors 9 determine a same distance to said neighboring wall. Furthermore, the three second laser distance measurement sensors 9 may be used to determine distance measurements for measuring curved walls, doors, and windows, for example, as discussed in detail above. For the measurement of windows, in particular, also the below discussed drone may be used.

The corresponding first and second sides, which each are arranged on the base element 16 opposite to the herein shown first and second sides 8, 10, respectively, comprise the identical sensors and cameras 7, 13, 19, but are not shown and not explained in detail herein again.

On an upper side 20 of the base element 16, a LiDAR sensor 6 is arranged, which is used by the apparatus 1 together with the depth camera 19 to obtain the first map. Obtaining the first map may further be supported using encoders and an IMU.

Above the upper side 20 of the base element 16, the base element 16 further has a platform 21, which is spaced apart from the upper side 20. On the platform 21, the drone 17 is parked, when the drone 17 is not in use. Additionally, the platform 21 comprises a camera, not shown herein, that is looking in general vertically upwards, in a direction of the drone 17, to control the flight of the drone.

The drone 17 has four propellers 22 and a control unit 23, which can receive controls for the flight of the drone 17 and the performing of measurements using the drone 17. The controls for the drone 17 are provided by a processing unit of the base element 16. To perform distance measurements at distance measurement points, the drone 17 further has two first laser distance measurement sensors 7, which may be of an identical type to the first laser distance measurement sensors 7 of the base element 16. In FIG. 6, however, only one of the two first laser distance measurement sensors 7 is visible, the other one is arranged at the opposite side of the drone 17.

In the embodiment shown herein, the drone is parked such that the laser distance measurement sensors 7 are oriented in a direction orthogonal to a direction of the first laser distance measurement sensors 7 of the base element 16. However, in case the drone 17 would is used and is raised above the base element, the drone would be yawed for 90° such that a direction of the first laser distance measurement sensors 7 of the drone 17 point in the same direction as those of the base element 16. Alternatively, the drone 17 could also be parked such that the laser distance measuring sensors 7 of the drone 17 are oriented in parallel to those of the base element 16.

Additionally to the elements described herein, the drone 17 may further comprise a camera unit, configured to take a pictures and/or a visual mark facing vertically down towards the base element 16, which are not shown herein. In the latter case, the base element 16 may further comprises a visual detection unit facing vertically up, towards the drone 17, wherein the visual detection unit is configured to track the visual mark on the drone 17 and to determine a height of the drone 17 based on a size of the visual mark, as well as a stability of the drone 17.

Moreover, the platform 21 may comprise one or more magnet rings, not shown herein, which have corresponding counterparts on the drone 17, and which guide the drone 17 for landing.

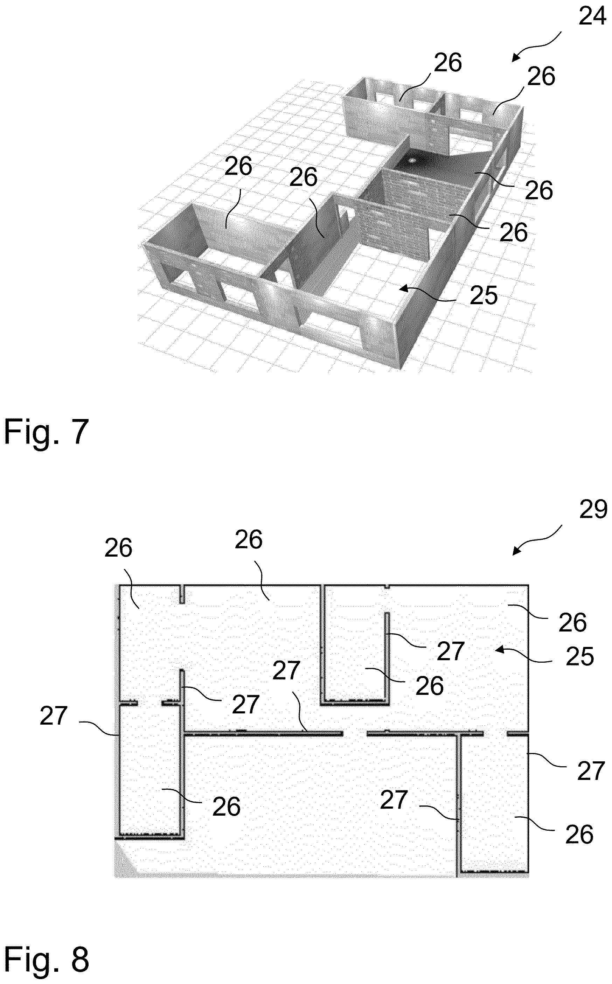

FIG. 7 shows an example of a structure 24 with a to-be-measured area 25. The structure 24, in this case, is a part of a building, for example an apartment. The structure 24 has multiple rooms 26, wherein the to-be-measured area corresponds to a floor area of the rooms 26.

FIGs 8 to 15 show different states of the autonomous measurement according to the invention. Those states according to FIGs 8 to 14 may occur during the methods described above. Those FIGs may be understood as visualization of the underlying concepts, and/or may be stored and/or processed as such in the autonomous measuring apparatus described above, when performing the herein described method. FIGs 8 to 14 use the example of the to-be-measured area 25 according to FIG. 7, however, the described concepts may correspondingly be used on any other to-be-measured areas as well.

FIG. 8 shows a first map 29 of the to-be-measured area 25. The first map as shown in FIG. 8 may be determined by the above-described apparatus, for example, by using a LiDAR sensor, optionally also with additional information obtained with a depth camera. In general, walls 27 and doorways 28 of the structure 24 are marked in the first map. This SLAM map, i.e., the first map 29, may be output and/or stored by the autonomous measuring apparatus, for further processing, as an image file.

Additionally, not shown herein, the SLAM map as shown in FIG. 8 could further be combined with 3D depth information from a depth camera of the apparatus.

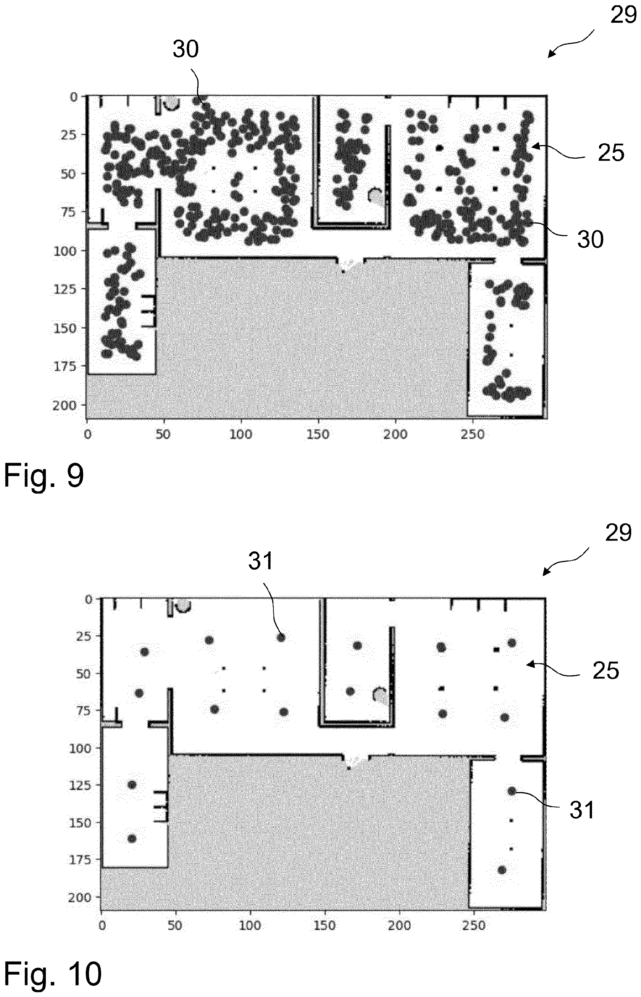

FIG. 9 shows a distribution of a plurality of random points 30 within the first map 29. Those random points 30 may be obtained, for example, by sampling the entire to-be-measured area 25 of the first map 29.

FIG. 10 shows a plurality of edge detection points 31 in the first map 29. The edge detection points are a subset of the random points 30 and may be obtained from the random points 30 by performing sliding window detection on the first map 29. The plurality of edge detection points 31 are determined by selecting a subset of points from the plurality of random points 30, from which the entire to-be-measured area 25 is visible.

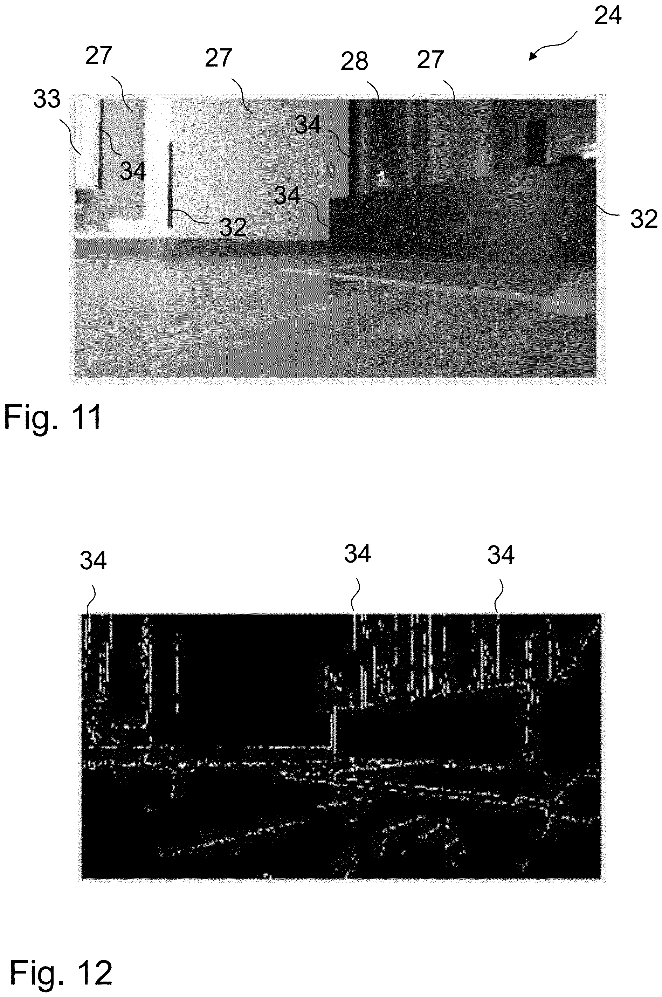

FIG. 11 shows an image of the structure 24, taken by the autonomous measuring apparatus from an edge detection point 31. The image shows walls 27, a doorway 28, and other objects, such as furniture 32 and a radiator 33. In the image, vertical edges 34, that are detected by the autonomous measuring apparatus after edge detection as shown in FIG. 12 has been carried out and the vertical edges are identified from all the detected edges, are marked. The related information regarding the detected edges may be output and/or stored by the autonomous measuring apparatus in a YAML file.

FIG. 12 shows the image of FIG. 11, as seen by the autonomous measuring apparatus, after edge detection has been performed on the image of FIG. 11, taken by the autonomous measuring apparatus from the edge detection point at which the apparatus was located when taking the image of FIG. 11. FIG. 12 shows all detected edges in white, including vertical edges and horizontal edges, and the remaining parts of the image in black. From those detected edges as shown in FIG. 12, the vertical edges are then filtered and, therewith, the vertical edge detection detects the vertical edges 34. The vertical edges 34 are then localized as shown as marked vertical edges in FIG 11.

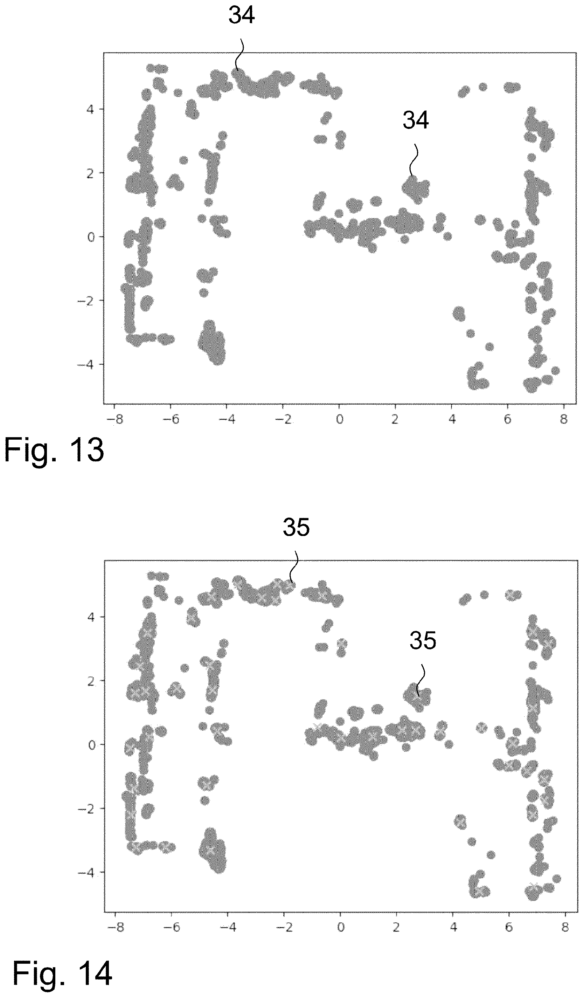

FIG. 13 shows a local distribution of where vertical edges are detected in the first map, without showing the first map itself. Each dot in FIG. 13 stands for a detected vertical edge 34. Since several edges appear in the edge detection from multiple edge detection points, those vertical edges are registered multiple times, even though they merely relate to a single vertical edge. To determine which of those results from the vertical edge detection relate to the same vertical edge, the autonomous measuring apparatus determines, using at least one ML model, which results from the vertical edge detection relate to the same vertical edge. The vertical edges, which are then determined using said at least one ML model, are used as distance measuring points. This is shown in FIG. 14, where the locations of the real vertical edges are marked with an "x".

Those locations are determined as distance measurement points 35. The information underlying the determined distance measurement points 35, as well as related values of distance measurements, after they are performed at the respective distance measurement points 35, may be output and/or stored by the autonomous measuring apparatus in a YAML file.

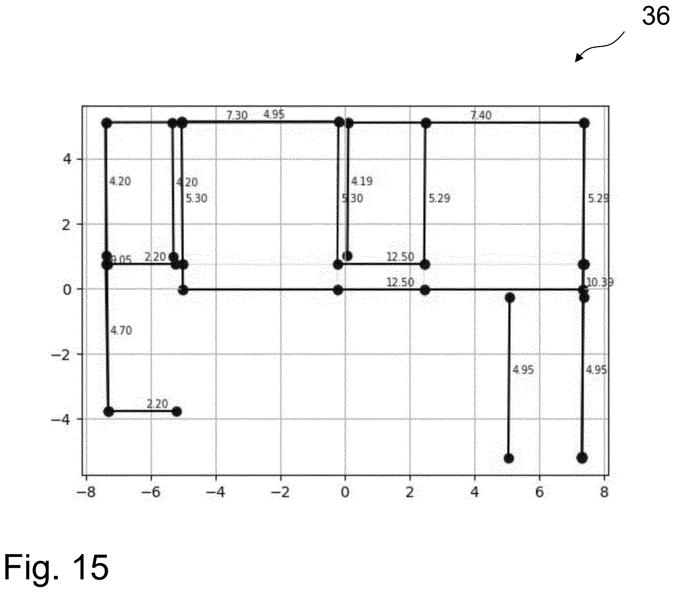

FIG. 15 shows a second map 36 of the to-be-measured area of the structure shown in FIG. 7. The second map 36 shows results of distance measurements, which are performed by the autonomous measuring apparatus from each of the distance measuring points shown in FIG. 14. In this embodiment, the results of the distance measurements are used to draw a new map with using information from the first map to generate the final accurate map, i.e., the second map, as shown in FIG. 15. Alternatively, the values shown herein may also be entered into the first map as shown in FIG. 8, to obtain the second map 36. Alternatively or additionally, the proportions of the first map may be adapted according to the results of the distance measurements. To show the results of the distance measurements in the second map 36, the values of the above-mentioned YAML file comprising the distance measurement results are converted into coordinates and then entered/updated in the first map 29 to obtain the second map 36.

Optionally, for any of the embodiments discussed herein, an additional manual measuring apparatus may be used in combination with the autonomous measuring apparatus. The manual measuring apparatus is a handheld measuring device, for example a handheld laser measuring device. This manual measuring apparatus may be connected to the autonomous measuring apparatus in any suitable manner known in the art. If the autonomous measuring apparatus is not able to take a sufficiently accurate measurement, the autonomous measuring apparatus may inform the user that a more accurate measurement should be obtained and, for example, display a to be manually measured area/wall/region/etc., for example on the mobile device. The user may then manually take the measurement using the manual measuring apparatus and, via it's connection to the autonomous measuring apparatus, may therewith automatically update the second map.

It is to be understood that any of the embodiments and features described with respect to any of the figures may be readily combined with any of the other embodiments and features described with respect to any of the remaining figures. Moreover, the features described with respect to specific embodiments of the figures are to be understood as possible embodiments of the invention, without limiting the general scope of the invention.

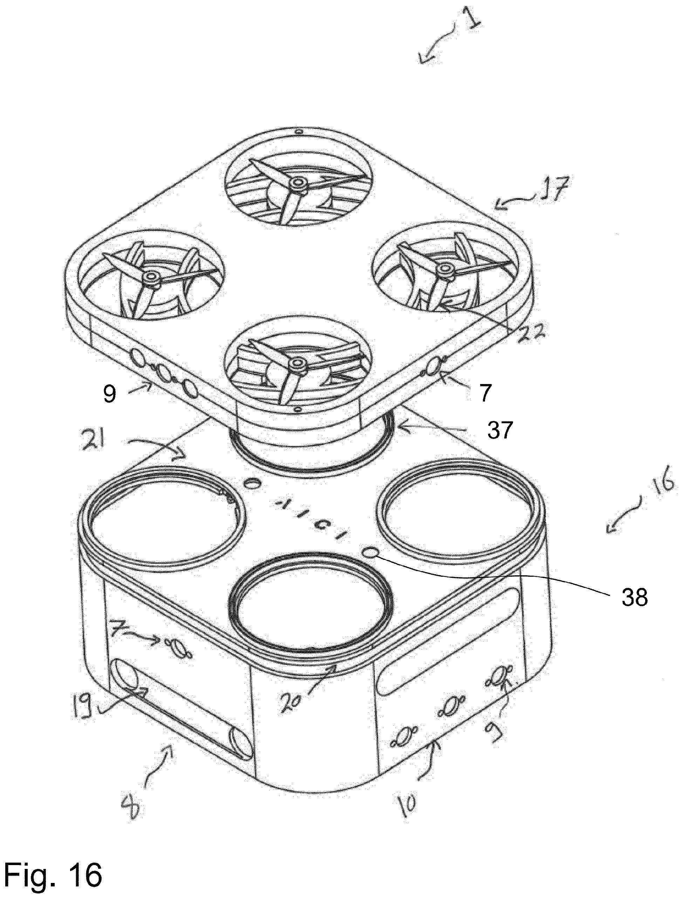

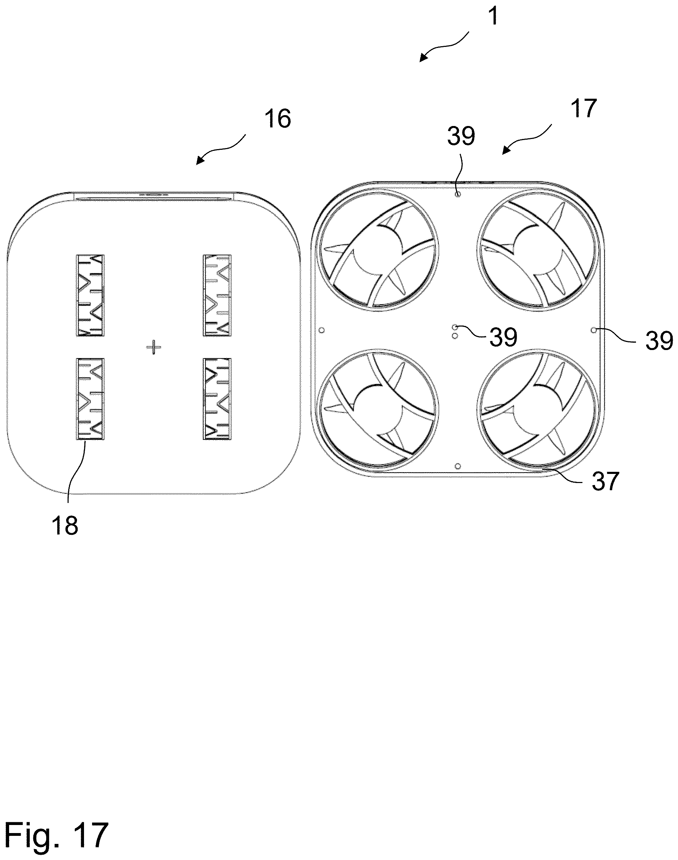

FIGs 16 and 17 show an autonomous measuring apparatus 1 according to yet another embodiment. FIG. 16 shows a perspective view of the apparatus 1, and FIG. 17 shows a bottom view of the base element 16 on the left and a bottom view of the drone 17 on the right.

Regarding features which have been discussed already above, in particular with regard to FIGs 4 and 6, it is referred to the details above. The embodiment of the apparatus 1 as shown in FIGs 16 and 17 does not show some of the elements shown in FIGs 4 and 6, since they are included in an interior of the device, such as the controller, for example.

The embodiment of FIGs 16 and 17, however, comprises also second laser distance measuring units 9 on the drone 17, with which the drone 17 may position itself in parallel to a wall, and/or may perform measurements, such as of curved walls and windows, for example. Furthermore, the embodiment of FIGs 16 and 17 shows magnetic rings 37, which are arranged on a topside of the base element 16, in an area where the propellers 22 of the drone 17 are arranged, when the drone 17 is parked on the base element 16. Those magnetic rings 37 may help landing the drone 17 on the base element 16.

Additionally, the base element 16 comprises an upward facing camera 38 on the topside of the base element, which are directed towards the bottom of the drone 17. The drone 17 has LEDs on its bottom, which may be tracked with the camera 38, and which thereby may help navigating and/or stabilizing a flight of the drone 17.

### List of Reference Signs

- 1: autonomous measuring apparatus
- 2: first map obtaining unit
- 3: processing unit
- 4: autonomous navigation unit
- 5: distance measuring unit
- 6: LiDAR sensor
- 7: first laser distance measuring unit
- 8: first side
- 9: second laser distance measuring unit
- 10: second side
- 11: movable unit
- 12: system
- 13: mobile device
- 14: communication unit
- 15: server
- 16: base element
- 17: drone
- 18: wheel
- 19: camera
- 20: upper side
- 21: platform
- 22: propeller
- 23: control unit
- 24: structure
- 25: to-be-measured area
- 26: room
- 27: wall
- 28: doorway
- 29: first map
- 30: random point
- 31: edge detection point
- 32: furniture
- 33: radiator
- 34: vertical edge
- 35: distance measuring point
- 36: second map
- 37: magnetic ring
- 38: upward facing camera
- 39: LED

- X: first central axis

- 101 to 105: method steps
- 201 to 213: method steps

## Claims

1. A method for operating an autonomous measuring apparatus, the method comprising the following steps:
- obtaining (101) a first map of a to-be-measured area of a structure;
- determining (102) a plurality of distance measuring points for performing a distance measurement;
- autonomously (103) navigating the measuring apparatus to each of the plurality of distance measuring points;
- performing (104) distance measurement in the to-be-measured area of the structure at each of the plurality of distance measuring points; and
- combining (105) results of the distance measurements with the first map of the to-be-measured area of the structure to obtain a second map.

2. The method according to claim 1, wherein the step of determining (102) a plurality of distance measuring points in the first map for performing a distance measurement comprises:
- determining a plurality of edge detection points in the first map;
- performing vertical edge detection at each of the edge detection points;
- determining the plurality of distance measuring points from results of the vertical edge detection using at least one machine learning, ML, model.

3. The method according to claim 2, wherein the step of determining a plurality of edge detection points in the first map comprises:
- determining (202) a plurality of random points at random locations in the first map;
- performing (203) sliding window detection on the first map to determine the plurality of edge detection points from the plurality of random points, wherein the plurality of edge detection points are determined such that the entire to-be-measured area of the structure is visible from the plurality of the edge detection points.

4. The method according to claim 2 or 3, wherein the step of performing vertical edge detection comprises:
- obtaining (204) a picture of the to-be-measured area of the structure; and
- determining (205) a vertical edge in the obtained picture at a location, where a contrast of the picture along a vertical line lies above a predetermined threshold.

5. The method according to any of claims 2 to 4, wherein the step of determining the plurality of distance measuring points from results of the vertical edge detection using at least one ML model comprises:
- determining (206) an expected number of edges using a first ML model; and/or
- clustering (207) the results of vertical edge detection using a second ML model to determine the distance measuring points.

6. The method according to claim 5, wherein the at least one model is an unsupervised ML model, and/or the first ML model is a density-based spatial clustering of applications with noise, DBSCAN, model, and/or the second ML model is a KMeans clustering model.

7. The method according to any of claims 1 to 6, wherein the step of autonomously navigating (103) the measuring apparatus to each of the plurality of distance measuring points comprises:
- navigating (208) the measuring apparatus as close as possible to a wall at which the respective distance measuring point is located; and/or aligning (209) the measuring apparatus, with respect to a direction of the distance measurement, in parallel to a wall next to the measuring apparatus; or
- determining a part of the structure that is to be measured; determining a starting point for the measurement of the to-be-measured part of the structure; navigating along the to-be-measured part of the structure and performing distance measurements during the navigation along the to-be-measured part of the structure.

8. The method according to any of claims 1 to 7, further comprising the step:
- performing (210) object detection in the to-be-measured area of the structure to determine a location of at least one object that is not part of the structure; and
- filtering out edges that belong to the at least one object that is not part of the structure from the results of the vertical edge detection.

9. The method according to any of claims 1 to 8, further comprising the step:
- uploading the first map to a mobile device and/or a server; and/or
- uploading (213) the second map to the mobile device and/or the server.

10. The method according to any of claims 1 to 9, wherein the step of obtaining (101) a first map of a to-be-measured area of a structure comprises:
- performing (201) simultaneous localization and mapping, SLAM, in particular 3D SLAM.

11. The method according to any of claims 1 to 10, wherein the step of performing (104) distance measurement in the to-be-measured area of the structure at each of the plurality of distance measuring points comprises:
- raising a movable unit of the autonomous measuring apparatus and performing the distance measurement using the movable unit.

12. An autonomous measuring apparatus (1), the apparatus (1) comprising:
- a first map obtaining unit (2), configured to obtain a first map (29) of a to-be-measured area (25) of a structure (24);
- a processing unit (3), configured to determine a plurality of distance measuring points (35) for performing a distance measurement;
- an autonomous navigation unit (4), configured to autonomously navigate the measuring apparatus (1) to each of the plurality of distance measuring points (35); and
- a distance measurement unit (5), configured to perform distance measurement in the to-be-measured area (25) of the structure (24) at each of the plurality of distance measuring points (35);
wherein the processing unit (3) is further configured to combine results of the distance measurements with the first map (29) of the to-be-measured area (25) of the structure (24) to obtain a second map (36).

13. The autonomous measuring apparatus (1) according to claim 12, wherein the first map obtaining unit (2) comprises at least one Light Detection and Ranging, LiDAR sensor (6), and/or at least one depth camera.

14. The autonomous measuring apparatus (1) according to claim 12 or 13, wherein the distance measurement unit (5) comprises at least one first laser distance measuring sensor (7) on a first side (8) of the autonomous measuring apparatus (1), in particular at least two first laser distance measuring sensors (7), at least one of each at two opposite first sides (8) of the autonomous measuring apparatus (1).

15. The autonomous measuring apparatus (1) according to claim 14, wherein:
- the autonomous navigation unit (4) comprises at least two, in particular at least three, second laser distance measuring sensors (9) on at least one second side (10) of the autonomous measuring apparatus (1), wherein the at least one second side (10) has a main surface being arranged in general orthogonal with respect to a surface of the at least one first side (8).

16. The autonomous measuring apparatus (1) according to any of claims 12 to 15, further comprising a movable unit, which is configured to be vertically raised and is further configured to perform the distance measurement of the autonomous measuring apparatus (1).

17. The autonomous measuring apparatus (1) according to claim 16, wherein the movable unit is a drone (17) and:
- the drone (17) comprises at least one horizontal laser distance measuring sensor for performing the distance measurement of the autonomous measuring apparatus; and/or
- the drone (17) further comprises a camera unit, configured to take a picture; and/or
- the drone (17) further comprises at least one further sensor facing vertically up; and/or
- the drone (17) further comprises an optical flow and range sensor; and/or
- the drone (17) further comprises at least one visual mark facing vertically down and the autonomous measuring apparatus further comprises a visual detection unit facing vertically up, wherein the visual detection unit is configured to track the visual mark on the drone (17) and to control the drone (17) based on a size and location of the visual mark.
